Europäisches Patentamt

European Patent Office

Office européen des brevets

(11) Publication number: **0 269 214**
**A2**

## (12) EUROPEAN PATENT APPLICATION

(21) Application number: **87308369.5**

(22) Date of filing: **22.09.87**

(51) Int. Cl.⁴: **H02M 7/538**

(30) Priority: **26.11.86 US 935351**

(43) Date of publication of application:
**01.06.88 Bulletin 88/22**

(84) Designated Contracting States:
**DE ES FR GB IT SE**

(71) Applicant: THE BABCOCK & WILCOX
COMPANY
1010 Common Street P.O. Box 60035
New Orleans Louisiana 70160(US)

(72) Inventor: **Fry, John James**
**1742 Empire Road**
**Wickliffe, Ohio 44092(US)**
Inventor: **Robertson, John Walter Jr.**
**11940 Summers**
**Chesterland, Ohio 44026(US)**
Inventor: **Bastijanic, Edward**
**7064 Bristlewood Drive**
**Concord, Ohio 44077(US)**

(74) Representative: **Cotter, Ivan.John et al**
**D. YOUNG & CO. 10 Staple Inn**
**London WC1V 7RD(GB)**

(54) **Power supply systems for totem pole switches.**

(57) In a power supply system (10) for power switches (12,14) arranged in a totem pole configuration, a single power supply (32), having an output voltage substantially less than a voltage (V +) applied to an upper one (12) of the power switches, periodically charges a capacitor (28) within a flying capacitor circuit (26,28). Microprocessor based control circuitry (16) controls charging and discharging of the capacitor (28) and periodic operation of the power switches (12,14) resulting in the voltage at an output of the power switches (12,14) being at system common or at the voltage (V +) applied to the upper power switch (12).

# POWER SUPPLY SYSTEMS FOR TOTEM POLE SWITCHES

This invention relates to systems for supplying power to switches arranged in a totem pole circuit configuration.

Totem pole circuit configurations are widely used in power switching circuits. In such types of circuit configuration, an upper power switch often operates at a high voltage with respect to the circuit common. Because of this, the power supply or source for these circuits must be capable of operating at substantially high voltages. Thus, many totem pole power switching circuits utilise PNP transistors for the upper power switch and employ multiple isolated power supplies. Such PNP transistors generally are superior to their NPN counterparts with respect to both voltage and current ratings and thus adversely affect the efficiency of the power switching circuits. In addition, isolated power supplies tend to be bulky and significantly increase the cost of the switching circuit.

Because of the foregoing, it has become desirable to develop a power supply system for switches arranged in a totem pole circuit configuration which eliminates the need for isolated power supplies and/or power supplies capable of operating at substantially high voltages.

According to the invention there is provided a system for supplying power to first and second switches arranged in a totem pole circuit configuration, the system comprising:

a power source electrically connected to the first switch and to the second switch;

energy storage means electrically connected to the first switch and the power source; and

means for controlling periodic operation of the first switch and the second switch resulting in periodic charging and discharging of the energy storage means and periodic application of a predetermined voltage at an output of the first switch and the second switch.

A preferred embodiment of the present invention described hereinbelow can solve or at least alleviate the aforementioned problems associated with the prior art. The preferred power supply system, which supplies power to an upper or first power switch and a lower or second power switch arranged in a totem pole circuit configuration, includes a single power supply or source having an output voltage that is substantially less than a voltage applied to the upper power switch, and a flying capacitor circuit having a capacitor which is charged to an output voltage of the power supply. Microprocessor based control circuitry provides logic necessary to control the upper and lower power switches and regulates the charging of the capacitor in the flying capacitor circuit. A ground isolation circuit isolates the microprocessor based control circuitry from the voltage that is applied to the upper power switch. Actuation of the lower power switch and deactuation of the upper power switch causes the capacitor to be charged by the power supply, resulting in the output of the power switches being maintained at the system common. Conversely, actuation of the upper power switch and deactuation of the lower power switch causes the capacitor to discharge through its load so as to maintain a voltage at the output of the power switches equal to the voltage applied to the upper power switch.

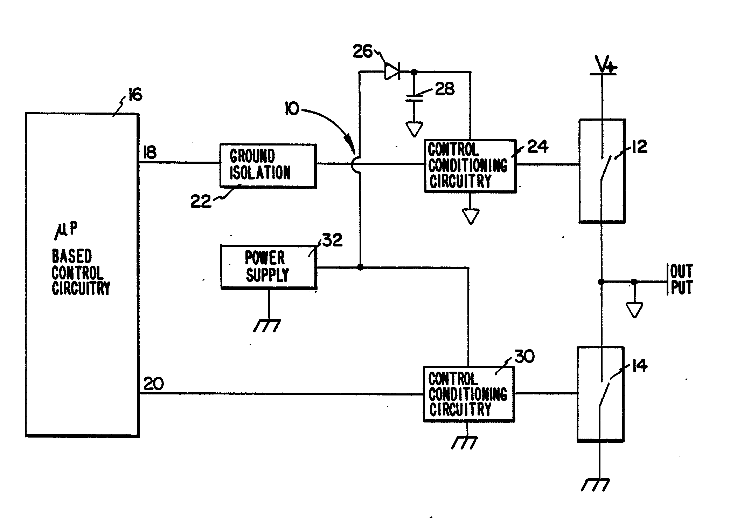

The invention will now be further described, by way of illustrative and non limiting example, with reference to the accompanying drawing, the single figure of which is a schematic diagram representing a power supply system according to a preferred embodiment of the invention.

The drawing is a schematic diagram of a power supply system 10 for power switches 12 and 14 arranged in a totem pole configuration. The power supply system 10 includes microprocessor based control circuitry 16 having an output 18 connected to an upper half of the power supply system 10 and an output 20 connected to a lower half of the power supply system 10. As shown, the output 18 of the microprocessor based control circuitry 16 is connected to an input to a ground isolation circuit 22 which has an output connected to an input to control conditioning circuitry 24. A flying capacitor circuit comprising a diode 26 and a capacitor 28 is connected to another input to the control conditioning circuitry 24. An output of the control conditioning circuitry 24 is connected to the power switch 12 and controls the operation thereof. A voltage source V+ is connected to an input to the power switch 12, which has an output connected to an output of the power switch 14 in a totem pole configuration. It should be noted that the capacitor 28 and the control conditioning circuitry 24 are referenced to a common which is the output of the power switches 12 and 14. This common can be a system common, V+, or an independent level, depending upon the state of the power switches 12 and 14. The output 20 of the microprocessor based control circuit 16 is connected to an input to control conditioning circuitry 30, which has an output which is connected to and controls the operation of the power switch 14. An output of a power supply 32 is connected to the anode of the diode 26 and to an input to the control conditioning circuitry 30. The power supply 32 provides an output voltage which is lower than the voltage V+ and powers the lower half of the power supply system 10. The power supply 32, the control conditioning circuit 30 and the power switch 14 are referenced to the system common.

The microprocessor based control circuitry 16 provides logic necessary to control the operation of the power switches 12 and 14 and to charge the capacitor 28 in the flying capacitor circuit. The ground isolation circuit 22 isolates the control logic within the microprocessor based control circuitry 16 from the control conditioning circuitry 24, thus allowing the microprocessor based control circuitry 16 to operate at voltages much less than the voltage V+.

In operation, when the power supply system 10 is inactive or when it becomes activated, firmware within the microprocessor based control circuitry 16 maintains the power switch 14 in a closed condition. Firmware in this case is a software library in a read only memory (ROM) of the microprocessor which can be utilised by other software, such as a main logic program. Thus, the output of the power switches 12 and 14 is maintained at the system common, permitting the capacitor 28 to charge to the output voltage of the power supply 32. This output voltage is substantially less than the voltage V+. When the firmware of the microprocessor based control circuitry 16 determines that the power switch 12 should be closed, the power switch 12 is so closed and the power switch 14 is opened. When the power switch 12 is closed, the output of the power switches 12 and 14 is referenced to the voltage V+, and the diode 26 prevents the voltage V+ from appearing at the output of the power supply 32. During this phase of operation, the energy stored within the capacitor 28 is used to supply power to the control conditioning circuitry 24 and to maintain the required biasing to keep the power switch 12 closed. When the firmware of the microprocessor based control circuitry 16 determines that the output of the power switches 12 and 14 should return to system common, the power switch 12 is allowed to open and the power switch 14 is closed. In this manner, the capacitor 28 can then be recharged to the output voltage of the power supply 32. The foregoing operating cycle can continue indefinitely. It should be noted that the maximum time that the power switch 12 can remain closed is determined by the discharge time constant of the capacitor 28 through its load. Conversely, the minimum time that the power switch 14 can remain closed is determined by the time required to charge the capacitor 28 through the diode 26. It is very advantageous that the charge time of the capacitor 28 be much shorter than its discharge time. It should also be noted that the power switch 14 does not necessarily need to remain closed during periods of inactivity. Alternatively, the power switch 14 can be closed briefly after periods of inactivity, permitting the capacitor 28 to charge before the foregoing operating cycle is commenced.

The above-described power supply system 10 provides significant advantages in numerous areas such as size, cost, number of components and efficiency. The need for a separate power supply for the upper half of the system 10 is eliminated. The components that are required by the system are considerably smaller and less expensive than the power supply that they replace. The system is also very efficient since the only loss is the voltage drop across the diode 26. In addition, the microprocessor based control circuitry 16 already contains the bulk of the logic required to implement the power supply system 10, and only a small amount of firmware need be added to implement same.

It should be noted that this power supply system 10 is especially useful for pulse width modulated systems, which, by their nature, require the alternate firing of power switches at regular intervals. Thus, the number and type of applications in which the power supply system 10 can be utilised is almost limitless.

## Claims

1. A system for supplying power to first and second switches (12,14) arranged in a totem pole circuit configuration, the system (10) comprising:
    a power source (32) electrically connected to the first switch (12) and to the second switch (14);
    energy storage means (28) electrically connected to the first switch (12) and the power source (32); and
    means (16) for controlling periodic operation of the first switch (12) and the second switch (14) resulting in periodic charging and discharging of the energy storage means (28) and periodic application of a predetermined voltage (V+) at an output of the first switch (12) and the second switch (14).

2. A system according to claim 1, wherein the periodic switch operation comprises a first phase of operation in which the energy storage means (28) is charged by the power source (32) and a second phase of operation in which the energy storage means (28) is allowed to discharge.

3. A system according to claim 2, wherein the output of the first switch (12) and the second switch (14) is referenced to a system common during the first phase of operation and the voltage at the output of the first switch (12) and the second switch (14) is said predetermined voltage (V+) during the second phase of operation.

4. A system according to claim 2 or claim 3, wherein the first switch (12) is open and the second switch (14) is closed during the first phase of operation and the second switch (14) is open and the first switch (12) is closed during the second phase of operation.

5. A system according to any one of the preceding claims, wherein the output of the first switch (12) and the second switch (14) is between the switches.